# EUROPÄISCHE PATENTANMELDUNG

(11) **EP 2 704 096 A1**
(43) Veröffentlichungstag der Anmeldung: **05.03.2014**
(21) Anmeldenummer: 12182248.0
(22) Anmeldetag: 29.08.2012
(51) Int. Cl.: G06T 7/00

(54) **Verfahren zum kalibrieren einer Bilderfassungseinrichtung**

(71) Anmelder: Delphi Technologies, Inc., Troy MI 48007 (US)
(72) Erfinder: Zhao, Kun, 47059 Duisburg (DE); Iurgel, Uri, 42369 Wuppertal (DE); Meuter, Mirko, 40699 Erkrath (DE); Müller, Dennis, 40699 Erkrath (DE); Nunn, Christian Markus, 42117 Wuppertal (DE)
(74) Vertreter: Manitz, Finsterwald & Partner GbR

(57) **Zusammenfassung**

Bei einem Verfahren zum Kalibrieren einer Bilderfassungseinrichtung, die an einem Kraftfahrzeug angeordnet ist und in der Lage ist, nacheinander Bilder eines vor dem Kraftfahrzeug befindlichen Verkehrsraums zu erfassen, werden in einem erfassten Bild wenigstens zwei Bildobjekte detektiert, welche in Weltkoordinaten geraden und zueinander im Wesentlichen parallelen Liniensegmenten entsprechen. Anhand der Bildobjekte wird die Position eines Fluchtpunkts in dem erfassten Bild geschätzt und mittels eines Tracking-Verfahrens verfolgt. Dabei wird ein Fehler für die Position des Fluchtpunkts berechnet. Sobald der berechnete Fehler einen vorbestimmten Schwellenwert unterschreitet, wird anhand der zu dem Fehler gehörigen Position des Fluchtpunkts die Bilderfassungseinrichtung kalibriert.

## Beschreibung

Die vorliegende Erfindung betrifft ein Verfahren zum Kalibrieren einer Bilderfassungseinrichtung, die an einem Kraftfahrzeug angeordnet ist und in der Lage ist, nacheinander Bilder eines vor dem Kraftfahrzeug befindlichen Verkehrsraums zu erfassen.

Bilderfassungseinrichtungen, wie z.B. Kameras, werden in modernen Kraftfahrzeugen als Eingabesensoren für verschiedene Arten von Fahrerassistenzsystemen, wie z.B. für Spurhalteassistenten, Spurhalteunterstützungs-Systeme, Fahrzeug- und Fußgängererkennungssysteme sowie Systeme zur automatischen Verkehrszeichenerkennung oder zur automatischen Leuchtweitenregulierung, verwendet. Bei derartigen Anwendungen ist es allgemein erforderlich, die Position der interessierenden Objekte in Weltkoordinaten anhand der Position von erkannten Bildobjekten in Bildkoordinaten zu ermitteln. Für diese Umrechnung zwischen Bildkoordinaten und Weltkoordinaten ist eine Kalibrierung der Kamera notwendig. Hierbei unterscheidet man zwischen intrinsischer und extrinsischer Kalibrierung. Bei der so genannten intrinsischen Kalibrierung werden die Parameter der Bilderfassungseinrichtung selbst bestimmt, wie z.B. die Brennweite des Kameraobjektivs oder die Lage der optischen Achse. Bei der so genannten extrinsischen Kalibrierung werden die Position und die Ausrichtung der Kamera relativ zu dem zugehörigen Kraftfahrzeug ermittelt. Die extrinsischen Kalibrierungs-Parameter sind im Allgemeinen für jedes Fahrzeug unterschiedlich. Dies liegt zum einen an unvermeidlichen Montagetoleranzen, die sowohl bei der Herstellung als auch im Falle einer Wartung oder Reparatur auftreten, und zum anderen an einer möglichen Bewegung der montierten Bilderfassungseinrichtung infolge wechselnder Beladungszustände des Fahrzeugs. Beispielsweise kann der Neigungswinkel einer Kamera, die im Führerhaus eines Lastwagens montiert ist, in Abhängigkeit von der Beladung des Lastwagens relativ stark variieren. Um eine zuverlässige Funktion der betreffenden Fahrerassistenzsysteme zu gewährleisten, ist daher eine regelmäßige und exakte Kalibrierung der zugehörigen Bilderfassungseinrichtung von großer Bedeutung. Für einen Benutzer ist es jedoch lästig, stets für eine korrekte Kalibrierung der Bilderfassungseinrichtung zu sorgen. Zudem ist es schwierig, die extrinsischen Kalibrierungs-Parameter, wie z.B. den Neigungswinkel der Kamera, ohne aufwändige Zusatzsensoren, sondern ausschließlich anhand der erfassten Bilder selbst, zu bestimmen.

Es ist eine Aufgabe der Erfindung, mit einfachen Mitteln eine zuverlässige Kalibrierung von an Kraftfahrzeugen angeordneten Bilderfassungseinrichtungen zu ermöglichen.

Die Lösung der Aufgabe erfolgt durch ein Verfahren zum Kalibrieren einer Bilderfassungseinrichtung mit den Merkmalen des Anspruchs 1.

Erfindungsgemäß werden in einem erfassten Bild wenigstens zwei Bildobjekte detektiert, welche in Weltkoordinaten geraden und zueinander im Wesentlichen parallelen Liniensegmenten entsprechen. Anhand der Bildobjekte wird die Position eines Fluchtpunkts in dem erfassten Bild geschätzt. Mittels eines Tracking-Verfahrens wird die geschätzte Position des Fluchtpunkts in nachfolgend erfassten Bildern verfolgt und ein Fehler für die Position des Fluchtpunkts berechnet. Sobald der berechnete Fehler einen vorbestimmten Schwellenwert unterschreitet, wird anhand der zu dem Fehler gehörigen Position des Fluchtpunkts die Bilderfassungseinrichtung kalibriert.

Der Fluchtpunkt wird also anhand von solchen Bildobjekten bestimmt, welche als in Weltkoordinaten geradlinig und zueinander parallel angenommen werden können. Hierbei ist zu bedenken, dass das Detektieren von Bildobjekten stets mit einer gewissen Unsicherheit behaftet ist und die genannten Bildobjekte daher nicht in jedem einzelnen erfassten Bild geradlinig und parallel im strengen Sinne sind. Es kommt lediglich darauf an, dass solche Bildobjekte verwendet werden, welche in grundsätzlicher Weise auf einen Fluchtpunkt zulaufen.

Beispielsweise kann es sich bei diesen Bildobjekten um so genannte Liniensegmente handeln, die aus stückweise erkannten Fahrspurmarkierungen extrahiert werden. Im Vergleich zu einer Fluchtpunktbestimmung mittels Texturanalyse, welche sehr rechenaufwändig ist, und zu einer Fluchtpunktbestimmung über erkannte vollständige Fahrspurmarkierungen, welche bei Kurvenfahrt nicht gerade verlaufen und eine geeignete mathematische Modellierung voraussetzen, ist eine Fluchtpunktbestimmung anhand von parallelen Liniensegmenten weniger rechenaufwändig und daher für Echtzeitanwendungen geeignet. Zudem ist auch bei kurvigem Straßenverlauf eine zuverlässige Bestimmung des Fluchtpunkts möglich. Durch das Tracking werden die Ergebnisse aus verschiedenen nacheinander erfassten Bildern zeitlich gefiltert, so dass besonders robuste und stabile Schätzergebnisse für den Fluchtpunkt erzielt werden.

Erst wenn der im Rahmen des Tracking-Verfahrens berechnete zu erwartende Fehler, also die Kovarianz der verfolgten Position des Fluchtpunkts, ausreichend gering ist, wird die Position des Fluchtpunkts als zuverlässig angesehen und zum Kalibrieren der Bilderfassungseinrichtung verwendet. Anhand der aus den Bilddaten ermittelten Position des Fluchtpunkts kann in grundsätzlich bekannter Weise der Neigungswinkel und/oder der seitliche Schwenkwinkel der Bilderfassungseinrichtung berechnet werden. Im Ergebnis ermöglicht die Erfindung somit eine schnelle, effiziente und robuste Online-Kalibrierung einer Bilderfassungseinrichtung, welche ausschließlich anhand von durch die Bilderfassungseinrichtung selbst erfassten Bildern durchführbar ist. Vorzugsweise erfolgt die Kalibrierung automatisch, d.h. ohne jeglichen Benutzereingriff.

Weiterbildungen der Erfindung sind in den abhängigen Ansprüchen, der Beschreibung sowie der beigefügten Zeichnung angegeben.

Vorzugsweise wird anhand jeweiliger den detektierten Bildobjekten zugeordneter Bildobjekt-Fehler ein auf das jeweilige erfasste Bild bezogener Einzelbild-Fehler für die Position des Fluchtpunkts berechnet. Dieser Einzelbild-Fehler kann als Kovarianz für das Tracking-Verfahren verwendet werden, sodass ein besonders zuverlässiges Verfolgen der Position des Fluchtpunkts ermöglicht wird.

Gemäß einer Ausgestaltung der Erfindung werden die Bildobjekt-Fehler bei dem Prozess des Schätzens der Position des Fluchtpunkts mitpropagiert und der Einzelbild-Fehler wird anhand der propagierten Bildobjekt-Fehler ermittelt. Der Einzelbild-Fehler kann dann in vorteilhafter Weise als Eingangs-Kovarianz für das Tracking-Verfahren verwendet werden. Ein unzuverlässiges Definieren einer ad-hoc-Kovarianz kann so vermieden werden.

Bevorzugt wird die Position des Fluchtpunkts unmittelbar anhand der zu Linien erweiterten Bildobjekte geschätzt, wobei besonders bevorzugt derjenige Punkt auf dem Bildsensor als Fluchtpunkt angesehen wird, welcher einen minimalen Abstand zu den zu Linien erweiterten Bildobjekten aufweist. Ein aufwändiges Einpassen oder "Fitting" der Bildobjekte in einen vorgegebenen Verlauf, also z.B. ein Modellieren von Fahrbahnmarkierungen, kann somit vermieden werden.

Vorzugsweise wird die geschätzte Position des Fluchtpunkts weiter verfolgt, solange der berechnete Fehler den Schwellenwert nicht unterschreitet. Mit anderen Worten erfolgt die Ermittlung des Fluchtpunkts iterativ anhand zeitlich nacheinander erfasster Bilder. Die Verwendung eines fehlerhaften Werts für den Fluchtpunkt in einem sicherheitsrelevanten Fahrerassistenzsystem ist durch diese Vorgehensweise ausgeschlossen.

Gemäß einer Ausführungsform der Erfindung wird das Verfolgen der Position des Fluchtpunkts abgebrochen und es wird eine Fehlermeldung ausgegeben, wenn der berechnete Fehler nach einer vorbestimmten Zeitdauer oder nach einer vorbestimmten Anzahl von Aktualisierungsschritten des Tracking-Verfahrens den Schwellenwert nicht unterschritten hat. Auf diese Weise ist ausgeschlossen, dass ein fehlerhafter Wert für den Fluchtpunkt zur Kalibrierung herangezogen wird. Zudem wird der Fahrer des Kraftfahrzeugs über das Vorliegen eines Fehlers informiert, so dass er gegebenenfalls geeignete Maßnahmen ergreifen kann.

Um das Risiko einer inkorrekten Umrechnung zwischen Weltkoordinaten und Bildkoordinaten weiter zu minimieren, kann auch eine Ausgabe eines aus der geschätzten Position des Fluchtpunkts ermittelten Kalibrier-Parameters an eine den Kalibrier-Parameter verwendende Steuereinrichtung unterbunden werden, solange der berechnete Fehler den Schwellenwert nicht unterschritten hat. Das heißt es wird gezielt verhindert, dass eine Steuereinrichtung, wie z.B. ein Fahrspurerkennungssystem, der Umrechnung zwischen Bildkoordinaten und Weltkoordinaten eine falsche Kamera-Kalibrierung zugrunde legt.

Gemäß einer bevorzugten Ausführungsform der Erfindung wird das Tracking-Verfahren mittels eines rekursiven Schätzers, insbesondere eines Kalman-Filters, durchgeführt. Die Verwendung eines Kalman-Filters hat sich bei der Verfolgung einer geschätzten Fluchtpunktposition als besonders vorteilhaft erwiesen.

Bevorzugt wird das Verfahren während des Betriebs des Kraftfahrzeugs wiederholt oder kontinuierlich durchgeführt. Eine wiederholte Durchführung des Kalibrierungsverfahrens kann beispielsweise bedeuten, dass die Bilderfassungseinrichtung in regelmäßigen Zeitabständen kalibriert wird. Grundsätzlich könnte eine Kalibrierung auch von einem auslösenden Ereignis, wie z.B. der Betätigung eines Kalibrierungsknopfs, abhängig gemacht werden. Vorzugsweise wird das Verfahren jedoch ohne Benutzereingabe gestartet.

Es ist auch bevorzugt, dass das Verfahren bei jeder Inbetriebnahme des Kraftfahrzeugs und/oder nach jeder Neu-Installation der Bilderfassungseinrichtung durchgeführt wird. Somit ist sichergestellt, dass etwaige Veränderungen der extrinsischen Parameter, welche z.B. infolge einer Dejustierung der Kamera oder einem Beladungswechsel des Kraftfahrzeugs auftreten, rechtzeitig kompensiert werden.

Gemäß einer Ausgestaltung der Erfindung werden in dem Bild mehrere horizontale Bildbereiche festgelegt, wobei für jeden Bildbereich wenigstens zwei Bildobjekte detektiert werden und anhand dieser Bildobjekte die Position eines Fluchtpunkts für den entsprechenden Bildbereich geschätzt wird. Durch eine solche Unterteilung in Einzelbereiche kann bei kurvenförmigem Straßenverlauf ein gekrümmtes Bildobjekt wie ein Straßenrand, eine Fahrspurmarkierung oder eine Leitplanke derart stückweise erkannt werden, dass die Erkennungen trotz der Krümmung geraden Liniensegmenten entsprechen. Mit anderen Worten sind die erkannten Liniensegmente aufgrund der Unterteilung in - z.B. streifenförmige - horizontale Bildbereiche so kurz, dass sie auch bei kurviger Straße als gerade angenommen werden können.

Die Positionen der Fluchtpunkte der einzelnen Bildbereiche können mittels eines Filterungs-Verfahrens zu der Position eines Fluchtpunkts für das gesamte Bild fusioniert werden. Dadurch können die Stabilität und die Robustheit des Verfahrens zur Fluchtpunktermittlung weiter gesteigert werden. Alternativ können die Positionen der Fluchtpunkte der einzelnen Bildbereiche auch einzeln nacheinander als Aktualisierungen in dem Tracking-Verfahren verwendet werden.

Gemäß einer Ausführungsform der Erfindung entsprechen die zu detektierenden Bildobjekte Abschnitten einer Fahrspurmarkierung, eines Fahrbahnrands oder eines sich entlang einer Fahrbahn erstreckenden Objekts, z.B. einer Leitplanke. Mit anderen Worten entsprechen die Bildobjekte bei dieser Ausführungsform realen Objekten in dem zu überwachenden Verkehrsraum. Es ist dabei von Vorteil, dass das Verfahren nicht auf die Erkennung und mathematische Modellierung von Fahrspurmarkierungen beschränkt ist. Vielmehr ermöglicht die Erfindung eine vergleichsweise hohe Flexibilität bei der Auswahl von geeigneten Bildobjekten zur Fluchtpunktermittlung.

Alternativ zu der vorstehend beschriebenen Ausführungsform können die zu detektierenden Bildobjekte auch Trajektorien von in mehreren nacheinander erfassten Bildern vorhandenen Bildmerkmalen, z.B. Helligkeitsspitzen, entsprechen. Es können also unabhängig von vorhandenen realen Objekten in dem zu überwachenden Verkehrsraum auch unterschiedliche Arten von interessanten Objekten in den erfassten Bildern zur Fluchtpunktermittlung verwendet werden. Beispielsweise kann ein Liniensegment dadurch definiert werden, dass die Positionen eines interessanten Bildobjekts in mehreren zeitlich nacheinander erfassten Bildern miteinander verglichen werden. Dies ist jedoch nicht zwingend notwendig. Die Festlegung eines Liniensegments kann auch auf Grundlage eines einzelnen Kamerabilds erfolgen, indem z.B. eine zuvor festgelegte Referenzposition für den Vergleich herangezogen wird. Die Fluchtpunktermittlung mittels interessanten Bildobjekten kann günstiger Weise auch dann erfolgen, wenn in dem zu überwachenden Verkehrsraum keine Fahrspurmarkierungen, Straßenränder oder Leitplanken detektierbar sind.

Die Erfindung betrifft auch ein Computerprogramm mit Programmcodemitteln zur Durchführung eines wie vorstehend beschriebenen Verfahrens, wenn das Computerprogramm auf einem Computer oder einer entsprechenden Recheneinheit ausgeführt wird.

Weiterhin betrifft die Erfindung ein Computerprogrammprodukt mit Programmcodemitteln, die auf einem computerlesbaren Datenträger gespeichert sind, zur Durchführung eines wie vorstehend beschriebenen Verfahrens, wenn das Computerprogramm auf einem Computer oder einer entsprechenden Recheneinheit ausgeführt wird.

Schließlich betrifft die Erfindung auch eine Vorrichtung zum Kalibrieren einer Bilderfassungseinrichtung, die an einem Kraftfahrzeug angeordnet und mit einer Datenverarbeitungseinrichtung verbunden ist, die zur Durchführung eines wie vorstehend beschriebenen Verfahrens ausgebildet ist.

Die Erfindung wird nachfolgend beispielhaft unter Bezugnahme auf die beigefügten Zeichnungen beschrieben.
- Fig. 1: ist eine schematische Darstellung einer an einem Kraftfahrzeug montierten Bilderfassungseinrichtung, welche den Zusammenhang zwischen dem Neigungswinkel der Bilderfassungseinrichtung und der Position eines Fluchtpunkts in einem erfassten Bild verdeutlicht.
- Fig. 2: zeigt ein Bild eines Verkehrsraums, welches durch die Bilderfassungseinrichtung gemäß Fig. 1 aufgenommen wurde.
- Fig. 3: ist ein Flussdiagramm, welches Verfahrensschritte eines erfindungsgemäßen Verfahrens zum Kalibrieren der Bilderfassungseinrichtung gemäß Fig. 1 darstellt.
- Fig. 4: ist ein Diagramm, das den Zusammenhang zwischen verschiedenen Systemzuständen eines Bildverarbeitungssystems darstellt, welches zum Ausführen des in Fig. 3 dargestellten Verfahrens ausgebildet ist.

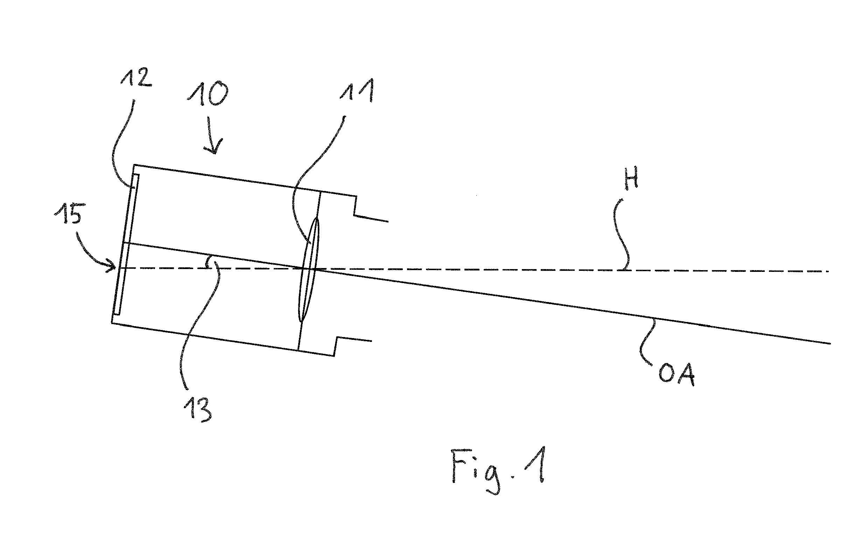

Fig. 1 zeigt in vereinfachter Form eine Bilderfassungseinrichtung in Form einer digitalen Kamera 10, welche eine Objektivlinse 11 und einen Bildsensor 12, beispielsweise einen CCD-Chip, aufweist. Die Kamera 10 ist an einem nicht dargestellten Kraftfahrzeug befestigt und dazu ausgebildet, zeitlich nacheinander Bilder eines vor dem Kraftfahrzeug befindlichen Verkehrsraums zu erfassen. Weiterhin ist die Kamera 10 mit einer nachgeordneten, in Fig. 1 nicht dargestellten Bildverarbeitungseinrichtung gekoppelt und bildet mit dieser zusammen ein Bildverarbeitungssystem.

Die Kamera 10 und die zugehörige Bildverarbeitungseinrichtung sind einem oder mehreren Fahrerassistenzsystemen zugeordnet, beispielsweise einem System zum Unterstützen des Spurhaltens (Spurhalteassistent). Die Kamera 10 ist nach unten geneigt, so dass die optische Achse OA der Kamera 10 mit der Horizontlinie H einen Neigungswinkel 13 einschließt. Wie aus Fig. 1 hervorgeht, korreliert die Position des Fluchtpunkts 15 auf dem Bildsensor 12 mit dem Betrag des Neigungswinkels 13. Eine Ermittlung der Position des Fluchtpunkts 15 ermöglicht daher ein Kalibrieren der Kamera 10 in der Form, dass der aktuelle tatsächliche Neigungswinkel 13 ermittelt und in einem Speicher abgelegt oder an eine Steuereinrichtung ausgegeben wird.

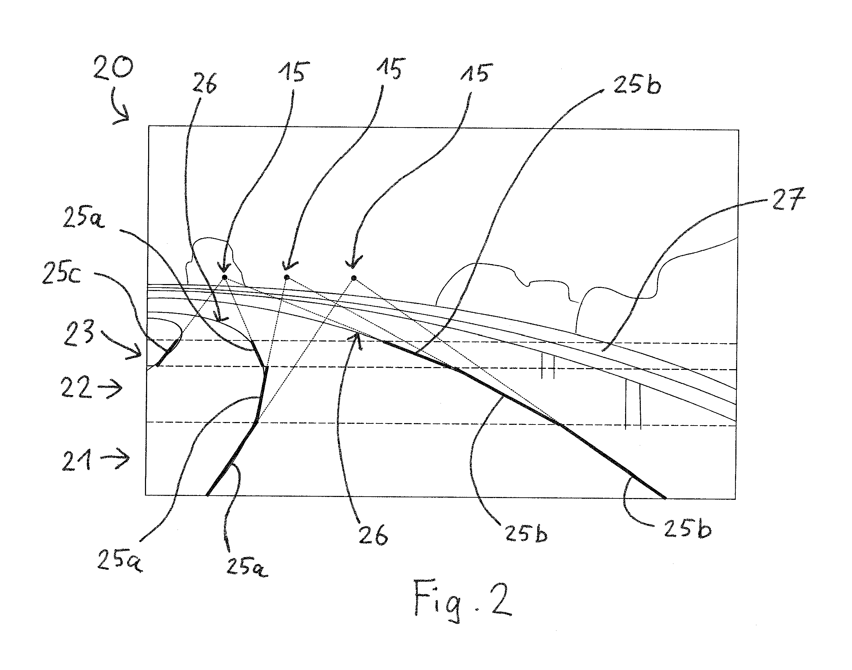

Ein Beispiel für ein von der Kamera 10 erfasstes Bild 20 des vor dem Kraftfahrzeug befindlichen Verkehrsraums ist in Fig. 2 vereinfacht dargestellt. Zum Kalibrieren der Kamera 10 wird ein unterer Teil des Bildes 20 zunächst in mehrere horizontale Bildbereiche 21, 22, 23 unterteilt. Es ist hierbei darauf hinzuweisen, dass die Unterteilung in drei horizontale Bildbereiche 21, 22, 23, wie in Fig. 2 durch gestrichelte Linien dargestellt, lediglich zur Verdeutlichung gewählt ist und bei Bedarf beträchtlich feiner ausfallen kann. In jedem der horizontalen Bildbereiche 21, 22, 23 werden mittels der Bildverarbeitungseinrichtung wenigstens zwei Bildobjekte 25a, 25b detektiert, welche in Weltkoordinaten geraden und zueinander parallelen Liniensegmenten entsprechen. Im dargestellten Beispiel handelt es sich bei den Bildobjekten 25a, 25b um Stücke einer erkannten Fahrspurmarkierung 26. Beim Detektieren der Bildobjekte 25a, 25b werden also jeweils einzelne Teilstücke einer zu verfolgenden Fahrspurmarkierung 26 erkannt, d.h. das Detektieren der Bildobjekte 25a, 25b erfolgt derart, dass an einer Fahrspurmarkierung 26, einem Fahrbahnrand oder einer Leitplanke 27 stückweise Einzelerkennungen vorgenommen werden und diese stückweisen Einzelerkennungen als gerade und in Weltkoordinaten zueinander parallele Bildobjekte 25a, 25b angenommen werden. Insbesondere werden dabei jeweils eine Position und eine Steigung für die geradlinigen Fahrspurmarkierungsstücke berücksichtigt. Wie in Fig. 2 erkennbar ist, sind in dem oberen horizontalen Bildbereich 23 sogar drei parallele Fahrspurmarkierungen 26 vorhanden, deren stückweise Erkennungen alle als Bildobjekte 25a, 25b, 25c zur Bestimmung des Fluchtpunkts 15 in dem oberen horizontalen Bildbereich 23 verwendet werden. Jedem der Bildobjekte 25a, 25b, 25c ist eine Varianz in Form eines Bildobjekt-Fehlers zugeordnet, welcher beim nachfolgend beschriebenen Schätzen des Fluchtpunkts 15 berücksichtigt wird.

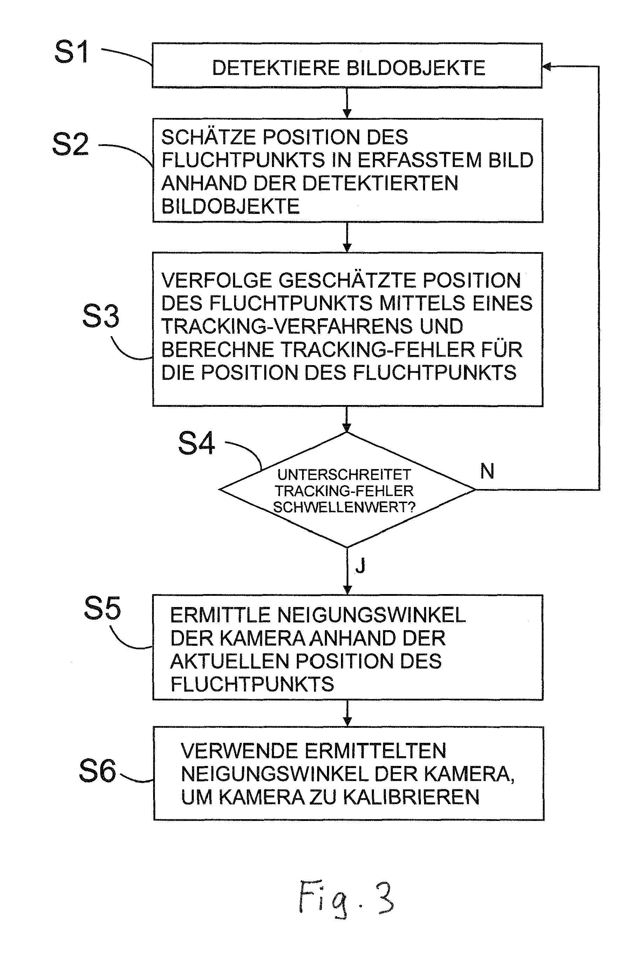

Aufgrund der Projektion der Fahrbahnoberfläche auf den Bildsensor 12 schneiden sich zwei in Weltkoordinaten zueinander parallele Liniensegmente in einem erfassten Bild 20. Dieser Umstand wird zur Ermittlung der Position des Fluchtpunkts 15 ausgenutzt. Wie in Fig. 3 dargestellt wird für jeden horizontalen Bildbereich 21, 22, 23 separat der virtuelle Schnittpunkt der jeweiligen Bildobjekte 25a, b, c ermittelt. Konkret wird hierfür derjenige Punkt auf dem Bildsensor 12 ermittelt, welcher einen minimalen euklidischen Abstand zu allen Linien des betreffenden horizontalen Bildbereichs aufweist. Dieser Punkt wird als der geschätzte Fluchtpunkt 15 angesehen. Die Ermittlung des Fluchtpunkts 15 kann als Optimierungsproblem formuliert und beispielsweise mittels der gewichteten Methode der kleinsten Quadrate (weighted least squares method) gelöst werden. Diese Methode ist vergleichsweise robust gegenüber Ausreißern, d.h. gegenüber fehlerhaft erkannten Bildobjekten 25a, 25b, 25c, welche nicht in Richtung des Fluchtpunkts 15 weisen. Bei den Berechnungen zur Lösung des Optimierungsproblems werden die vorstehend erwähnten Bildobjekt-Fehler mitpropagiert, um so eine Kovarianz in Form eines Einzelbild-Fehlers für die Position des Fluchtpunkts 15 in dem betreffenden Bild 20 zu erhalten.

Wie aus Fig. 2 hervorgeht, liegen bei kurvigem Straßenverlauf die Fluchtpunkte 15 für die einzelnen horizontalen Bildbereiche 21, 22, 23 an unterschiedlichen Positionen. Diese Abweichung betrifft jedoch lediglich die horizontale Position der Fluchtpunkte 15, d.h. die Bildkoordinate X, während die vertikale Position der Fluchtpunkte 15, d.h. die Bildkoordinate Y, für alle horizontalen Bildbereiche 21, 22, 23 gleich ist. Die Bildkoordinate Y eines Fluchtpunkts 15 kann somit unmittelbar dazu verwendet werden, den Neigungswinkel 13 der Kamera 10 zu ermitteln und diese darauf beruhend zu kalibrieren. Für jeden Bildbereich 21, 22, 23 wird durch Propagieren der entsprechenden Bildobjekt-Fehler ein eigener Einzelbild-Fehler für die Position des Fluchtpunkts 15 ermittelt. Sollte zum Kalibrieren der Kamera 10 auch die Bildkoordinate X des Fluchtpunkts 15 benötigt werden, um z.B. den seitlichen Schwenkwinkel zu ermitteln, so könnten die horizontalen Positionen der Fluchtpunkte 15 in den einzelnen horizontalen Bildbereichen 21, 22, 23 prinzipiell mittels bekannter Filterungsverfahren zu einem gemeinsamen Fluchtpunkt (nicht dargestellt) für das gesamte Bild 20 fusioniert werden. Bei einem geradlinigen Straßenverlauf spielt die separate Ermittlung von Fluchtpunkten 15 in den einzelnen horizontalen Bildbereichen 21, 22, 23 keine Rolle.

Es hat sich gezeigt, dass die Ermittlung des Fluchtpunkts 15 auf Grundlage eines einzelnen erfassten Bildes 20 in der Praxis zu ungenau und zu wenig verlässlich ist, um eine korrekte Kalibrierung zu gewährleisten. Die ermittelte Position des Fluchtpunkts 15 wird daher mittels eines Tracking-Verfahrens unter Verwendung eines Kalman-Filters in nachfolgend erfassten Bildern 20 verfolgt. Hierbei wird in grundsätzlich bekannter Weise ein zu erwartender Fehler für die Position des Fluchtpunkts 15 berechnet. Erst wenn dieser Fehler klein genug ist, um von einer zuverlässigen Schätzung ausgehen zu können, wird die eigentliche Kalibrierung durchgeführt. Das heißt sobald der berechnete Fehler einen vorbestimmten Schwellenwert unterschreitet, wird anhand der zu dem Fehler gehörigen Position des Fluchtpunkts 15 die Kamera 10 kalibriert. Konkret kann die geschätzte Zustandsvarianz im Kalman-Filter als ein Kriterium zum Beenden des Tracking-Prozesses verwendet werden.

Auf der Grundlage des vereinfachten Lochkameramodells gemäß Fig. 1 und unter der Annahme eines Rollwinkels von Null werden der Neigungswinkel 13 sowie der in Fig. 1 nicht sichtbare seitliche Schwenkwinkel der Kamera 10 unter zusätzlicher Verwendung der bekannten intrinsischen Kalibrierungs-Parameter berechnet und gespeichert und/oder ausgegeben. Der Kalibriervorgang ist dann abgeschlossen.

Fig. 3 zeigt die beim Kalibrieren der Kamera 10 durchgeführten Verfahrensschritte im Detail. Zunächst werden in einem Schritt S1 für jeden horizontalen Bildbereich 21, 22, 23 die entsprechenden Fahrspurmarkierungsstücke als Bildobjekte 25a, 25b, 25c detektiert. Anschließend wird wie zuvor beschrieben die Position des Fluchtpunkts 15 in dem erfassten Bild 20 anhand der detektierten Bildobjekte 25a, 25b, 25c geschätzt. Es wird dann in einem Schritt S3 die geschätzte Position des Fluchtpunkts 15 mittels eines Tracking-Verfahrens verfolgt, wobei ein Tracking-Fehler für die Position des Fluchtpunkts 15 unter Verwendung eines zuvor ermittelten Einzelbild-Fehlers berechnet wird. In einem Schritt S4 wird geprüft, ob der Tracking-Fehler einen vorgegebenen Schwellenwert unterschreitet. Falls der Tracking-Fehler den Schwellenwert unterschreitet, wird in einem Schritt S5 der Neigungswinkel 13 der Kamera 10 anhand der aktuellen Position des Fluchtpunkts 15 ermittelt. In einem abschließenden Schritt S6 wird der ermittelte Neigungswinkel 13 der Kamera 10 dazu verwendet, die Kamera 10 zu kalibrieren. Falls im Schritt S4 der Tracking-Fehler den Schwellenwert nicht unterschreitet, erfolgt ein Rücksprung zum Schritt S1 und das Detektieren der Bildobjekte 25a, 25b, 25c, das Schätzen der Position des Fluchtpunkts 15 sowie das Verfolgen der geschätzten Position des Fluchtpunkts 15 werden anhand des nächsten erfassten Bildes 20 wiederholt. Sollte der Tracking-Fehler nach einer vorbestimmten Zeitdauer oder nach einer vorbestimmten Anzahl von Aktualisierungsschritten des Tracking-Verfahrens den Schwellenwert nicht unterschritten haben, wird das Verfolgen der Position des Fluchtpunkts 15 abgebrochen und es wird eine Fehlermeldung ausgegeben. Weiterhin wird eine Ausgabe eines aus der geschätzten Position des Fluchtpunkts 15 ermittelten Neigungswinkels 13 an eine den Neigungswinkel 13 verwendende Steuereinrichtung unterbunden, solange der Tracking-Fehler den Schwellenwert nicht unterschritten hat.

Das Verfahren wird kontinuierlich während des Fahrzeugbetriebs durchgeführt und ohne Benutzereingabe gestartet. Anstelle des Erkennens von Fahrspurmarkierungsstücken wie in Fig. 2 dargestellt, können als zu detektierende Bildobjekte auch Fahrbahnränder, Leitplanken 27 oder Trajektorien von interessanten Bildobjekten (nicht dargestellt) verwendet werden.

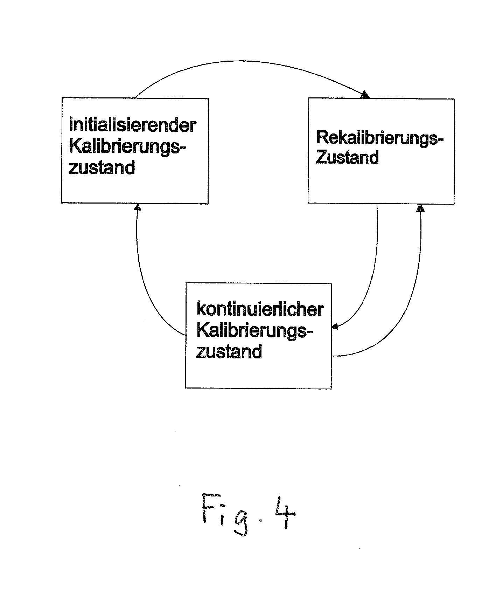

Das Bilderfassungssystem, welches das vorstehend beschriebene Verfahren ausführt, kann drei verschiedene Kalibrierungszustände 30, 31, 32 einnehmen, wie in Fig. 4 verdeutlich ist. Je nachdem, ob bestimmte Bedingungen erfüllt sind, kann das Bilderfassungssystem von jedem der drei Kalibrierungszustände 30, 31, 32 aus starten und während der Durchführung des Kalibrierungsverfahrens zwischen den einzelnen Kalibrierungszuständen 30, 31, 32 wechseln. Üblicherweise startet das Verfahren mit dem initialisierenden Kalibrierungszustand 30, falls keine A-priori-Informationen bezüglich der extrinsischen Parameter der Kamera 10 vorliegen. Beispielsweise startet das System in dem initialisierenden Kalibrierungszustand 30, wenn die Kamera 10 neu installiert wurde oder die Montageposition sowie der Orientierungswinkel im Rahmen einer Wartung oder Reparatur geändert wurden. Das Hauptziel des initialisierenden Kalibrierungszustands 30 besteht darin, die Kamera 10 unter der Berücksichtigung von Genauigkeitsvorgaben so schnell wie möglich zu kalibrieren. Da in dem initialisierenden Kalibrierungszustand 30 keine A-priori-Informationen über die extrinsischen Parameter der Kamera 10 vorliegen, kann von einem nachgeordneten System wie einem Fahrerassistenzsystem keine Umrechnung zwischen Weltkoordinaten und Bildkoordinaten durchgeführt werden. Anwendungen, welche von dieser Umrechnung abhängen, können daher nicht ausgeführt werden, wenn die Kalibrierung nicht erfolgreich ist. Deshalb wird das Verfolgen der Position des Fluchtpunkts 15 abgebrochen und es wird eine Fehlermeldung ausgegeben, wenn der berechnete Fehler nach einer vorbestimmten Zeitdauer oder nach einer vorbestimmten Anzahl von Aktualisierungsschritten des Tracking-Verfahrens den Schwellenwert nicht unterschritten hat.

Falls das Ziel des initialisierenden Kalibrierungszustands 30 jedoch erreicht wurde, wechselt das System automatisch in den kontinuierlichen Kalibrierungszustand 31. Falls A-priori-Informationen bezüglich der extrinsischen Parameter der Kamera 10 vorliegen, kann das System auch in dem kontinuierlichen Kalibrierungszustand 31 starten. Die A-priori-Informationen können von gespeicherten Ergebnissen eines zuvor durchgeführten Kalibrierungsvorgangs stammen oder auf einer Schätzung beruhen. In dem kontinuierlichen Kalibrierungszustand 31 prüft das System die Genauigkeit des Kalibrierungsergebnisses online durch Vergleich mit der aktuellen Schätzung. Falls hier eine Abweichung gefunden wird, kann das System in Abhängigkeit von dem Ausmaß der Abweichung die aktuelle Schätzung als Kalibrierungsergebnis ausgeben und den kontinuierlichen Kalibrierungszustand 31 beibehalten oder in den initialisierenden Kalibrierungszustand 30 wechseln. Falls das System das Ergebnis als Ausgabe an andere Anwendungen liefert, wechselt es in den Rekalibrierungszustand 32. Bei Bedarf kann das System in diesem Zustand stehenbleiben. Einige Anwendungen, welche von der Umrechnung zwischen Weltkoordinaten und Bildkoordinaten abhängen, benötigen nämlich eine gewisse Zeit, um auf eine neue Kalibrierung der Kamera 10 zu reagieren. Nachdem die Kalibrierungsergebnisse durch die betreffenden Anwendungen verarbeitet wurden, wechselt das System bevorzugt wieder in den kontinuierlichen Kalibrierungszustand 31.

Wie beschrieben verwendet ein erfindungsgemäßes Kalibrierungsverfahren z.B. stückweise detektierte Fahrspurmarkierungen 26 direkt in einem robusten Schätzprozess, um den Fluchtpunkt 15 der Kamera 10 auch bei kurvigem Straßenverlauf zu bestimmen. Ein Vorteil liegt hierbei darin, dass solche stückweisen Erkennungen von Fahrspurmarkierungen 26 häufig ohnehin vorgenommen werden, beispielsweise im Rahmen der Spurhalteunterstützung, und daher in effizienter Weise zur Kalibrierung mitgenutzt werden können. Weiterhin ist es von Vorteil, dass ein erfindungsgemäßes Kalibrierungsverfahren nicht von einer mathematischen Modellierung bzw. einer Regression abhängt. Für das Verfahren kommt es auch nicht darauf an, ob genau zwei Fahrspurmarkierungen vorliegen oder etwa mehrere, ob die Breite der Fahrspurmarkierungen einer bestimmten Vorgabe entspricht oder ob es sich um durchgezogene oder gestrichelte Fahrspurmarkierungen handelt. Die Erfindung ermöglicht daher eine besonders effiziente und zuverlässige Kalibrierung einer Kamera 10 im kontinuierlichen, automatischen Betrieb unter verschiedenen Bedingungen.

### Bezugszeichenliste

- 10: Kamera
- 11: Objektivlinse
- 12: Bildsensor
- 13: Neigungswinkel
- 15: Fluchtpunkt
- 20: Bild
- 21: unterer horizontaler Bildbereich
- 22: mittlerer horizontaler Bildbereich
- 23: oberer horizontaler Bildbereich
- 25a, 25b, 25c: Bildobjekt
- 26: Fahrspurmarkierung
- 27: Leitplanke
- 30: initialisierender Kalibrierungszustand
- 31: kontinuierlicher Kalibrierungszustand
- 32: Rekalibrierungszustand

- H: Horizontlinie
- OA: optische Achse

## Patentansprüche

1. Verfahren zum Kalibrieren einer Bilderfassungseinrichtung (10), die an einem Kraftfahrzeug angeordnet ist und in der Lage ist, nacheinander Bilder (20) eines vor dem Kraftfahrzeug befindlichen Verkehrsraums zu erfassen, wobei
in einem erfassten Bild (20) wenigstens zwei Bildobjekte (25a, 25b) detektiert werden, welche in Weltkoordinaten geraden und zueinander im Wesentlichen parallelen Liniensegmenten entsprechen,
anhand der Bildobjekte (25a, 25b) die Position eines Fluchtpunkts (15) in dem erfassten Bild (20) geschätzt wird,
mittels eines Tracking-Verfahrens die geschätzte Position des Fluchtpunkts (15) in nachfolgend erfassten Bildern (20) verfolgt wird und ein Fehler für die Position des Fluchtpunkts (15) berechnet wird, und
sobald der berechnete Fehler einen vorbestimmten Schwellenwert unterschreitet, anhand der zu dem Fehler gehörigen Position des Fluchtpunkts (15) die Bilderfassungseinrichtung (10) kalibriert wird.

2. Verfahren nach Anspruch 1,
**dadurch gekennzeichnet, dass**
anhand jeweiliger den detektierten Bildobjekten (25a, 25b) zugeordneter Bildobjekt-Fehler ein auf das jeweilige erfasste Bild (20) bezogener Einzelbild-Fehler für die Position des Fluchtpunkts (15) berechnet wird.

3. Verfahren nach Anspruch 2,
**dadurch gekennzeichnet, dass**
die Bildobjekt-Fehler bei dem Prozess des Schätzens der Position des Fluchtpunkts (15) mitpropagiert werden und der Einzelbild-Fehler anhand der propagierten Bildobjekt-Fehler ermittelt wird.

4. Verfahren nach zumindest einem der vorstehenden Ansprüche,
**dadurch gekennzeichnet, dass**
die Position des Fluchtpunkts (15) unmittelbar anhand der zu Linien erweiterten Bildobjekte (25a, 25b) geschätzt wird, wobei vorzugsweise derjenige Punkt auf dem Bildsensor (12) als Fluchtpunkt (15) angesehen wird, welcher einen minimalen Abstand zu den zu Linien erweiterten Bildobjekten (25a, 25b) aufweist.

5. Verfahren nach zumindest einem der vorstehenden Ansprüche,
**dadurch gekennzeichnet, dass**
die geschätzte Position des Fluchtpunkts (15) weiter verfolgt wird, solange der berechnete Fehler den Schwellenwert nicht unterschreitet, und/oder
das Verfolgen der Position des Fluchtpunkts (15) abgebrochen wird und eine Fehlermeldung ausgegeben wird, wenn der berechnete Fehler nach einer vorbestimmten Zeitdauer oder nach einer vorbestimmten Anzahl von Aktualisierungsschritten des Tracking-Verfahrens den Schwellenwert nicht unterschritten hat.

6. Verfahren nach zumindest einem der vorstehenden Ansprüche,
**dadurch gekennzeichnet, dass**
eine Ausgabe eines aus der geschätzten Position des Fluchtpunkts (15) ermittelten Kalibrier-Parameters an eine den Kalibrier-Parameter verwendende Steuereinrichtung unterbunden wird, solange der berechnete Fehler den Schwellenwert nicht unterschritten hat.

7. Verfahren nach zumindest einem der vorstehenden Ansprüche,
**dadurch gekennzeichnet, dass**
das Tracking-Verfahren mittels eines rekursiven Schätzers, insbesondere eines Kalman-Filters, durchgeführt wird.

8. Verfahren nach zumindest einem der vorstehenden Ansprüche,
**dadurch gekennzeichnet, dass**
das Verfahren während des Betriebs des Kraftfahrzeugs wiederholt oder kontinuierlich durchgeführt wird, und/oder
das Verfahren bei jeder Inbetriebnahme des Kraftfahrzeugs und/oder nach jeder Neu-Installation der Bilderfassungseinrichtung (10) durchgeführt wird.

9. Verfahren nach zumindest einem der vorstehenden Ansprüche,
**dadurch gekennzeichnet, dass**
in dem Bild (20) mehrere horizontale Bildbereiche (21, 22, 23) festgelegt werden, wobei für jeden Bildbereich (21, 22, 23) wenigstens zwei Bildobjekte (25a, 25b, 25c) detektiert werden und anhand dieser Bildobjekte (25a, 25b, 25c) die Position eines Fluchtpunkts (15) für den entsprechenden Bildbereich (21, 22, 23) geschätzt wird.

10. Verfahren nach Anspruch 9,
**dadurch gekennzeichnet, dass** die Positionen der Fluchtpunkte (15) der einzelnen Bildbereiche (21, 22, 23) mittels eines Filterungs-Verfahrens zu der Position eines Fluchtpunkts für das gesamte Bild (20) fusioniert werden.

11. Verfahren nach zumindest einem der vorstehenden Ansprüche,
**dadurch gekennzeichnet, dass**
die zu detektierenden Bildobjekte (25a, 25b) Abschnitten einer Fahrspurmarkierung (26), eines Fahrbahnrands oder eines sich entlang einer Fahrbahn erstreckenden Objekts (27), z.B. einer Leitplanke, entsprechen.

12. Verfahren nach zumindest einem der vorstehenden Ansprüche,
**dadurch gekennzeichnet, dass**
die zu detektierenden Bildobjekte Trajektorien von in mehreren nacheinander erfassten Bildern (20) vorhandenen Bildmerkmalen, z.B. Helligkeitsspitzen, entsprechen.

13. Computerprogramm mit Programmcodemitteln zur Durchführung eines Verfahrens gemäß einem der vorstehenden Ansprüche, wenn das Computerprogramm auf einem Computer oder einer entsprechenden Recheneinheit ausgeführt wird.

14. Computerprogrammprodukt mit Programmcodemitteln, die auf einem computerlesbaren Datenträger gespeichert sind, zur Durchführung eines Verfahrens gemäß einem der Ansprüche 1 bis 12, wenn das Computerprogramm auf einem Computer oder einer entsprechenden Recheneinheit ausgeführt wird.

15. Vorrichtung zum Kalibrieren einer Bilderfassungseinrichtung, die an einem Kraftfahrzeug angeordnet und mit einer Datenverarbeitungseinrichtung verbunden ist, die zur Durchführung eines Verfahrens gemäß einem der Ansprüche 1 bis 12 ausgebildet ist.

## Geänderte Patentansprüche

### Geänderte Patentansprüche gemäss Regel 137(2) EPÜ.

**1.** Verfahren zum Kalibrieren einer Bilderfassungseinrichtung (10), die an einem Kraftfahrzeug angeordnet ist und in der Lage ist, nacheinander Bilder (20) eines vor dem Kraftfahrzeug befindlichen Verkehrsraums zu erfassen, wobei
in einem erfassten Bild (20) wenigstens zwei Bildobjekte (25a, 25b) detektiert werden, welche in Weltkoordinaten geraden und zueinander im Wesentlichen parallelen Liniensegmenten entsprechen,
anhand der Bildobjekte (25a, 25b) die Position eines Fluchtpunkts (15) in dem erfassten Bild (20) geschätzt wird,
mittels eines Tracking-Verfahrens die geschätzte Position des Fluchtpunkts (15) in nachfolgend erfassten Bildern (20) verfolgt wird und ein zu erwartender Fehler für die Position des Fluchtpunkts (15) berechnet wird, und
sobald der im Rahmen des Tracking-Verfahrens berechnete zu erwartende Fehler einen vorbestimmten Schwellenwert unterschreitet, anhand der zu dem Fehler gehörigen Position des Fluchtpunkts (15) die Bilderfassungseinrichtung (10) kalibriert wird.

**2.** Verfahren nach Anspruch 1,
**dadurch gekennzeichnet, dass**
anhand jeweiliger den detektierten Bildobjekten (25a, 25b) zugeordneter Bildobjekt-Fehler ein auf das jeweilige erfasste Bild (20) bezogener Einzelbild-Fehler für die Position des Fluchtpunkts (15) berechnet wird.

**3.** Verfahren nach Anspruch 2,
**dadurch gekennzeichnet, dass**
die Bildobjekt-Fehler bei dem Prozess des Schätzens der Position des Fluchtpunkts (15) mitpropagiert werden und der Einzelbild-Fehler anhand der propagierten Bildobjekt-Fehler ermittelt wird.

**4.** Verfahren nach zumindest einem der vorstehenden Ansprüche,
**dadurch gekennzeichnet, dass**
die Position des Fluchtpunkts (15) unmittelbar anhand der zu Linien erweiterten Bildobjekte (25a, 25b) geschätzt wird, wobei vorzugsweise derjenige Punkt auf dem Bildsensor (12) als Fluchtpunkt (15) angesehen wird, welcher einen minimalen Abstand zu den zu Linien erweiterten Bildobjekten (25a, 25b) aufweist.

**5.** Verfahren nach zumindest einem der vorstehenden Ansprüche,
**dadurch gekennzeichnet, dass**
die geschätzte Position des Fluchtpunkts (15) weiter verfolgt wird, solange der berechnete Fehler den Schwellenwert nicht unterschreitet, und/oder
das Verfolgen der Position des Fluchtpunkts (15) abgebrochen wird und eine Fehlermeldung ausgegeben wird, wenn der berechnete Fehler nach einer vorbestimmten Zeitdauer oder nach einer vorbestimmten Anzahl von Aktualisierungsschritten des Tracking-Verfahrens den Schwellenwert nicht unterschritten hat.

**6.** Verfahren nach zumindest einem der vorstehenden Ansprüche,
**dadurch gekennzeichnet, dass**
eine Ausgabe eines aus der geschätzten Position des Fluchtpunkts (15) ermittelten Kalibrier-Parameters an eine den Kalibrier-Parameter verwendende Steuereinrichtung unterbunden wird, solange der berechnete Fehler den Schwellenwert nicht unterschritten hat.

**7.** Verfahren nach zumindest einem der vorstehenden Ansprüche,
**dadurch gekennzeichnet, dass**
das Tracking-Verfahren mittels eines rekursiven Schätzers, insbesondere eines Kalman-Filters, durchgeführt wird.

**8.** Verfahren nach zumindest einem der vorstehenden Ansprüche,
**dadurch gekennzeichnet, dass**
das Verfahren während des Betriebs des Kraftfahrzeugs wiederholt oder kontinuierlich durchgeführt wird, und/oder das Verfahren bei jeder Inbetriebnahme des Kraftfahrzeugs und/oder nach jeder Neu-Installation der Bilderfassungseinrichtung (10) durchgeführt wird.

**9.** Verfahren nach zumindest einem der vorstehenden Ansprüche,
**dadurch gekennzeichnet, dass**
in dem Bild (20) mehrere horizontale Bildbereiche (21, 22, 23) festgelegt werden, wobei für jeden Bildbereich (21, 22, 23) wenigstens zwei Bildobjekte (25a, 25b, 25c) detektiert werden und anhand dieser Bildobjekte (25a, 25b, 25c) die Position eines Fluchtpunkts (15) für den entsprechenden Bildbereich (21, 22, 23) geschätzt wird.

**10.** Verfahren nach Anspruch 9,
**dadurch gekennzeichnet, dass**
die Positionen der Fluchtpunkte (15) der einzelnen Bildbereiche (21, 22, 23) mittels eines Filterungs-Verfahrens zu der Position eines Fluchtpunkts für das gesamte Bild (20) fusioniert werden.

**11.** Verfahren nach zumindest einem der vorstehenden Ansprüche,
**dadurch gekennzeichnet, dass**
die zu detektierenden Bildobjekte (25a, 25b) Abschnitten einer Fahrspurmarkierung (26), eines Fahrbahnrands oder eines sich entlang einer Fahrbahn erstreckenden Objekts (27), z.B. einer Leitplanke, entsprechen.

**12.** Verfahren nach zumindest einem der vorstehenden Ansprüche,
**dadurch gekennzeichnet, dass**
die zu detektierenden Bildobjekte Trajektorien von in mehreren nacheinander erfassten Bildern (20) vorhandenen Bildmerkmalen, z.B. Helligkeitsspitzen, entsprechen.

**13.** Computerprogramm mit Programmcodemitteln zur Durchführung eines Verfahrens gemäß einem der vorstehenden Ansprüche, wenn das Computerprogramm auf einem Computer oder einer entsprechenden Recheneinheit ausgeführt wird.

**14.** Computerprogrammprodukt mit Programmcodemitteln, die auf einem computerlesbaren Datenträger gespeichert sind, zur Durchführung eines Verfahrens gemäß einem der Ansprüche 1 bis 12, wenn das Computerprogramm auf einem Computer oder einer entsprechenden Recheneinheit ausgeführt wird.

**15.** Vorrichtung zum Kalibrieren einer Bilderfassungseinrichtung, die an einem Kraftfahrzeug angeordnet und mit einer Datenverarbeitungseinrichtung verbunden ist, die zur Durchführung eines Verfahrens gemäß einem der Ansprüche 1 bis 12 ausgebildet ist.
